(19) Europäisches Patentamt
European Patent Office
Office européen des brevets

(11) **EP 1 543 601 B1**

(12) **EUROPÄISCHE PATENTSCHRIFT**

(45) Veröffentlichungstag und Bekanntmachung des Hinweises auf die Patenterteilung:
**09.05.2007 Patentblatt 2007/19**

(21) Anmeldenummer: **03798042.2**

(22) Anmeldetag: **07.07.2003**

(51) Int Cl.:
***H02K 1/14*** *(2006.01)*

(86) Internationale Anmeldenummer:
**PCT/DE2003/002253**

(87) Internationale Veröffentlichungsnummer:
**WO 2004/030179 (08.04.2004 Gazette 2004/15)**

(54) **STÄNDER UND ELEKTRISCHE MASCHINE**

STATOR AND ELECTRICAL MACHINE

STATOR ET MACHINE ELECTRIQUE

(84) Benannte Vertragsstaaten:
**DE FR GB IT**

(30) Priorität: **20.09.2002 DE 10243986**

(43) Veröffentlichungstag der Anmeldung:
**22.06.2005 Patentblatt 2005/25**

(73) Patentinhaber: **ROBERT BOSCH GMBH**
**70442 Stuttgart (DE)**

(72) Erfinder:
• **RAU, Eberhard**
**70825 Korntal-Muenchingen (DE)**
• **BERGER, Thomas**
**71254 Ditzingen (DE)**
• **HENNE, Martin**
**71696 Moeglingen (DE)**
• **PFLUEGER, Klaus**
**71735 Eberdingen (DE)**

(56) Entgegenhaltungen:
WO-A-90/09863        DE-A- 3 906 368
FR-A- 2 641 909

• **PATENT ABSTRACTS OF JAPAN vol. 2000, no. 25, 12. April 2001 (2001-04-12) -& JP 2001 231190 A (SONY CORP), 24. August 2001 (2001-08-24)**

**Beschreibung**

Stand der Technik

Aus der japanischen Offenlegungsschrift 9-103052 ist ein Ständer sowie eine elektrische Maschine nach dem Oberbegriff des Anspruchs 1 bereits bekannt. Zur Herstellung dieses Ständers werden zunächst einzelne Blechlamellen ausgestanzt, eine bestimmte Anzahl dieser Blechlamellen einander deckend bis zur gewünschten axialen Breite des Kerns geschichtet. Diese geschichteten Blechlamellen bilden den Ständerkern, der damit auf einer Seite für einen Ständer übliche, zueinander parallel ausgerichtete Zähne und Nuten aufweist. Eine vorgewickelte Kernwicklung liegt beispielsweise in etwa in ebener Form vor und wird in die Nuten des beispielsweise im Wesentlichen flachen Kerns anschließend eingelegt. Die Baugruppe aus Kern und Kernwicklung wird anschließend so rundgebogen, dass ein hohlzylindrischer Ständer entsteht. Nach dem Rundbiegen der Baugruppe aus Ständereisen und Wicklung werden die beiden Enden durch Schweißen miteinander verbunden. Die Schweißverbindung zwischen den beiden Enden ist eine vielfältig belastete Fügeverbindung, für deren spezielle Ausführung aus dem Stand der Technik keine technische Lehre bekannt ist.

Aus der japanischen Offenlegungsschrift 2001-123190 ist ein anderes Verfahren zur Herstellung eines Ständers bekannt.

Vorteile der Erfindung

Der erfindungsgemäße Ständer mit den Merkmalen des Hauptanspruchs hat den Vorteil, dass durch die Angabe der Schweißnahttiefe in Abhängigkeit von der wirksamen Jochhöhe und einem Toleranzwert für die Schweißnahttiefe eine Vorschrift angegeben wird, durch die die vielfältigen Einflussparameter auf den Ständer einer elektrischen Maschine sicher und zuverlässig beherrschbar sind, so dass einerseits ein Aufreißen der Schweißnaht an der Fügestelle nach dem Schweißen sicher vermieden wird und andererseits beispielsweise die elektromagnetischen Eigenschaften des Ständereisens an der Fügestelle nicht zu sehr nachteilig beeinflusst werden. Durch die angegebene Vorschrift zur Bestimmung der Schweißnahttiefe $T_S$, wonach die Schweißnahttiefe $T_S$ durch die folgende Funktion in Abhängigkeit der Jochhöhe $H_{Joch}$ und einem Toleranzwert $\Delta T_S$ angegeben wird,

$$T_s = 0{,}5\text{mm} * (H_{Joch}/\text{mm} - 1) \pm \Delta T_s \, ,$$

erhält die Schweißnaht einerseits eine ausreichende Stärke, um bei bestimmter Jochhöhe die entstehenden Zugkräfte in der Schweißnaht aufzunehmen, andererseits ist die Schweißnaht nicht zu tief, so dass diese durch entstehende Gefügeänderungen im Joch die magnetischen Eigenschaften an der Schweißstelle nicht zu negativ beeinflusst. Zu diesen Einflüssen gehört beispielsweise einerseits die Höhe der entstehenden und unerwünschten Wirbelstromverluste.

Weist die Größe $\Delta T_S$ einen Betrag von 1 mm auf, so ergibt sich eine sichere Schweißverbindung für den sich ergebenden Mindestwert und andererseits keine zu tiefe Schweißnaht, was den Maximalwert angeht.

Weist der Wert $\Delta T_S$ einen Betrag von 0,5 mm auf, so lässt sich die Schweißnahtqualität besonders sicher reproduzieren.

Unterschreitet die Schweißnahttiefe $T_S$ einen von der Jochhöhe $H_{Joch}$ abhängigen Mindestbetrag $T_{Smin}$ nicht, wobei der Mindestbetrag $T_{Smin}$ proportional zur Jochhöhe $H_{Joch}$ multipliziert mit dem Faktor 3/40 ist, so ergibt sich eine Mindestfestigkeit der Schweißnaht für verschiedene Jochhöhen $H_{Joch}$.

Ist an der Fügestelle das Joch so ausgebildet, dass auf der Außenseite zwei Teilzähne an der Fügestelle angeordnet sind, so ergibt sich dabei der positive Effekt, dass einerseits die Schweißstelle vom Joch besonders weit entfernt ist und andererseits bereits beim Schweißvorgang verhältnismäßig viel Wärme von diesem Außenzahn abgegeben werden kann. Ein Teil der Wärme erreicht somit das Joch nicht. Die elektromagnetischen Eigenschaften des Jochs werden weniger stark beeinflusst.

Ordnet man die Schweißnaht an einer radialen Innenseite des Jochs an, so dass die Fügestelle auf einem Zahnkopf angeordnet ist, so wird dadurch zuverlässig das Schwingen dieser Halbzähne vermieden.

Des Weiteren ist vorgesehen, dass die Schweißnaht an zumindest einer axialen Seite des Ständers angeordnet ist. Das magnetische Geräusch an dieser Stelle wird dadurch reduziert.

Ist die Schweißnaht eine Laserstrahlschweißnaht, so ist durch die Ausführung der Schweißung eine besonders sichere Durchführung des Verfahrens zum Herstellen der Schweißnaht gegeben. Die Schweißparameter lassen sich zuverlässig einstellen, ein zusätzlicher Auftrag von Schweißgut erfolgt nicht, die Schweißwärme ist verglichen mit anderen Verfahren, beispielsweise Auftragsschweißen, deutlich verringert. Des weiteren ist vorgesehen, dass der Ständerkern aus einem Material besteht, das nicht mehr als 0,1% Kohlenstoffgehalt (Massengehalt) aufweist.

Der Kohlenstoffgehalt beeinflusst die Spröde der Schweißnaht und damit die Haltbarkeit beispielsweise unter Schwingungsbelastung.

Zeichnungen

In den Zeichnungen sind Ausführungsbeispiele eines erfindungsgemäßen Ständers sowie einer elektrischen Maschine dargestellt.

Es zeigen:

Figur 1 einen Ständer gemäß einem ersten Ausführungsbeispiel,
Figur 2 eine Stirnansicht auf zwei Ausführungsbeispiele von Schweißnähten am gefügten Ständerkern,
Figur 3 ein Diagramm in dem die Funktion für die Schweißnahttiefe $T_S$ für unterschiedliche Parameter dargestellt ist,
Figur 4 und Figur 5 eine Stirnansicht auf zwei weitere Ausführungsbeispiele von Schweißnähten am gefügten Ständerkern,
Figur 6 eine Darstellung zur Ermittlung der Jochhöhe bei besonderer Gestaltung des Jochs.

Beschreibung

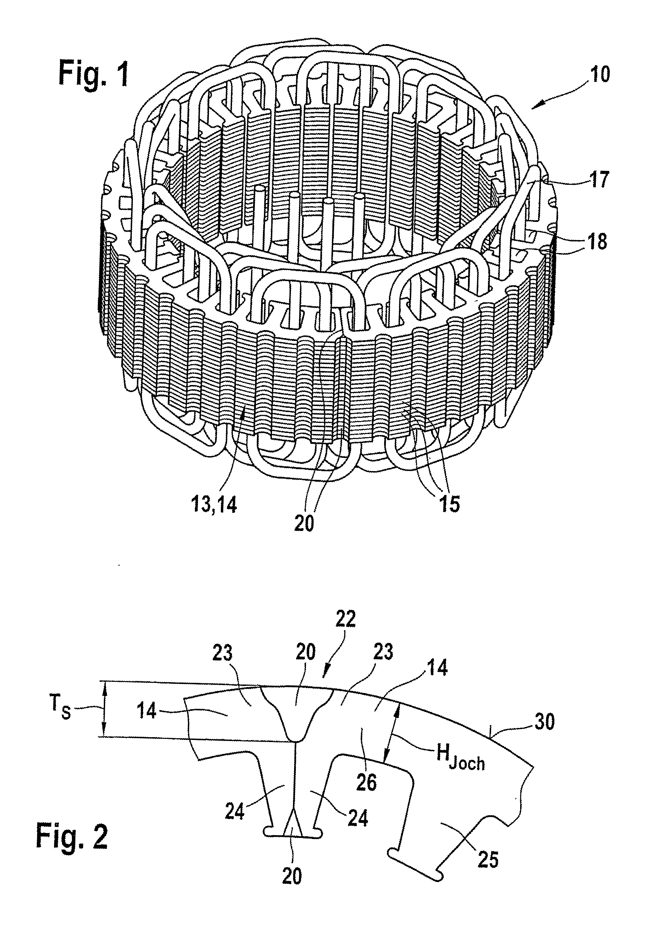

In Figur 1 ist ein Ständer 10 einer elektrischen Maschine dargestellt. Der Ständer 10 weist einen ringförmigen Ständerkern 13 aus einem Ständerkernsegment 14 auf. Der Ständerkern 13 besteht in diesem Fall aus einem Ständerkernsegment 14, das wiederum aus einer Vielzahl einzelner Ständerlamellen 15 hergestellt ist. Der Ständerkern 13 weist, wie auch der Stand der Technik, nach radial innen gerichtete Nuten 18 auf, in die eine Ständerwicklung 17 eingelegt ist. Dieser Ständer 10 wird wie nachfolgend beschrieben hergestellt. Es werden einzelne allgemein streifenförmige Ständerlamellen 15 hergestellt, die sich bogenförmig oder gerade erstrecken können. Die einzelnen Ständerlamellen 15 werden so paketiert, dass eine Seite entsteht, die durchgehend mit Nuten 18 versehen ist, in die später die Ständerwicklung 17 eingelegt wird. Nach dem Einlegen der Ständerwicklung 17 entsteht eine Baugruppe aus dem Ständerkern 13 und der Ständerwicklung 17, die anschließend so rund gebogen wird, dass ein zylindrischer Hohlraum entsteht, in dem die Nuten 18 enden. Zur Fixierung dieses Zustands ist vorgesehen, dass zumindest zwei nach dem Rundbiegen sich gegenüberliegende Enden des Ständerkerns 13 mittels einer Schweißnaht 20 fixiert werden. Andernfalls würde der Ständer 10 an der Fügestelle klaffen. Ein Einbau in eine zylindrische Bohrung eines Gehäuses ließe sich kaum bewerkstelligen.

In Figur 2 ist die Fügestelle 22 dargestellt. Beiderseits der Fügestelle 22 ist je ein Ende 23 zumindest eines Ständerkernsegments 14 zu sehen. Beide Enden 23 sind so ausgebildet, dass jeweils ein Teilzahn 24 an einem anderen Teilzahn 24 anliegt. Beide Teilzähne 24 wirken zusammen wie ein ganzer Zahn. An der Fügestelle 22 ist die Schweißnaht 20 im Querschnitt zu sehen. Die Schweißnaht 20 weist in radialer Richtung, d.h. in Richtung entlang der Fügestelle bzw. der Fläche, in der die Teilzähne 24 anliegen, eine Schweißnahttiefe $T_S$ auf. Ein Joch 26, d.h. ein Teil des Ständerkerns 13 bzw. eines Ständerkernsegments 14 zwischen zwei Zähnen, beispielsweise zwischen einem Teilzahn 24 und einem Teilzahn 25 weist eine Jochhöhe $H_{Joch}$ auf.

Für die Schweißnahttiefe $T_S$ soll in Abhängigkeit von der Jochhöhe $H_{Joch}$ folgende Funktion gelten:

$$T_s = 0,5\text{mm} * (H_{Joch}/\text{mm} - 1) \pm \Delta T_s \,,$$

Die Schweißnahttiefe $T_S$ ist damit abhängig von der Jochhöhe $H_{Joch}$ und dem Toleranzwert $\Delta T_S$. Die Funktion zur Bestimmung der Schweißnahttiefe $T_S$ besteht demzufolge aus einer Grundfunktion $f_B$

$$f_B = 0,5\text{mm} * (H_{Joch}/\text{mm} - 1)$$

in Abhängigkeit von der Jochhöhe $H_{Joch}$ und dem zusätzlichen Toleranzwert $\Delta T_S$. Die Variablen $H_{Joch}$ und $\Delta T_S$ sind in Millimeter (mm) anzugeben, ($H_{Joch}/\text{mm} -1$) ist dimensionslos. In erster Näherung ist vorgesehen, dass $\Delta T_S$ der Größe $\Delta T_{S1}$ entspricht, die einen Betrag von 1,0 mm hat. In zweiter Näherung ist vorgesehen, dass $\Delta T_S$ der Größe $\Delta T_{S2}$

entspricht, die einen Betrag von 0,5 mm hat.

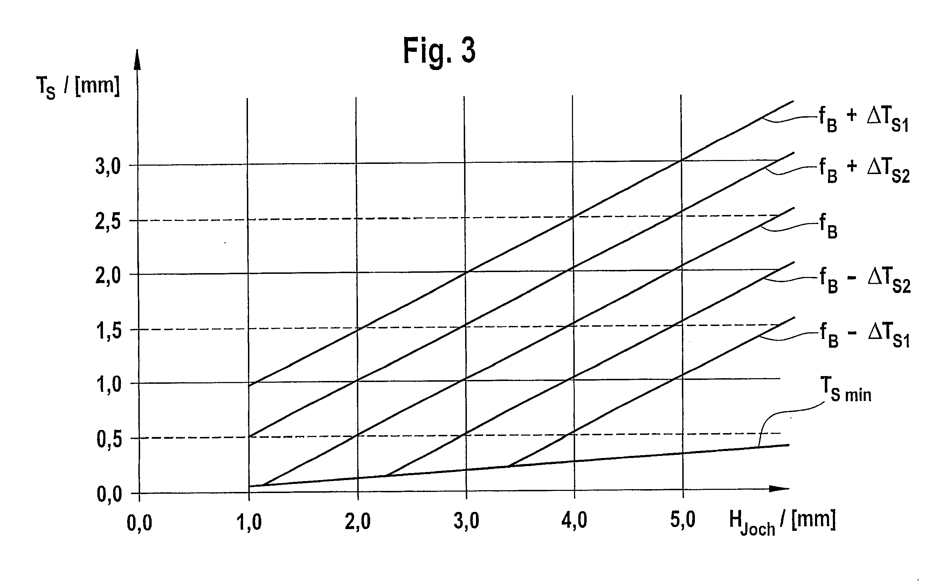

In der Figur 3 ist die Funktion für $T_S$ für die unterschiedlichen Parameter, d.h. in Abhängigkeit von der Jochhöhe und dem Toleranzwert $\Delta T_S$ dargestellt. Des Weiteren ist in Figur 3 die Funktion der minimalen Schweißnahttiefe $T_{Smin}$ dargestellt, die abhängig von der Jochhöhe $H_{Joch}$ ist. Die Funktion lässt sich beschreiben durch

$$T_{Smin} = 3/40 * H_{Joch},$$

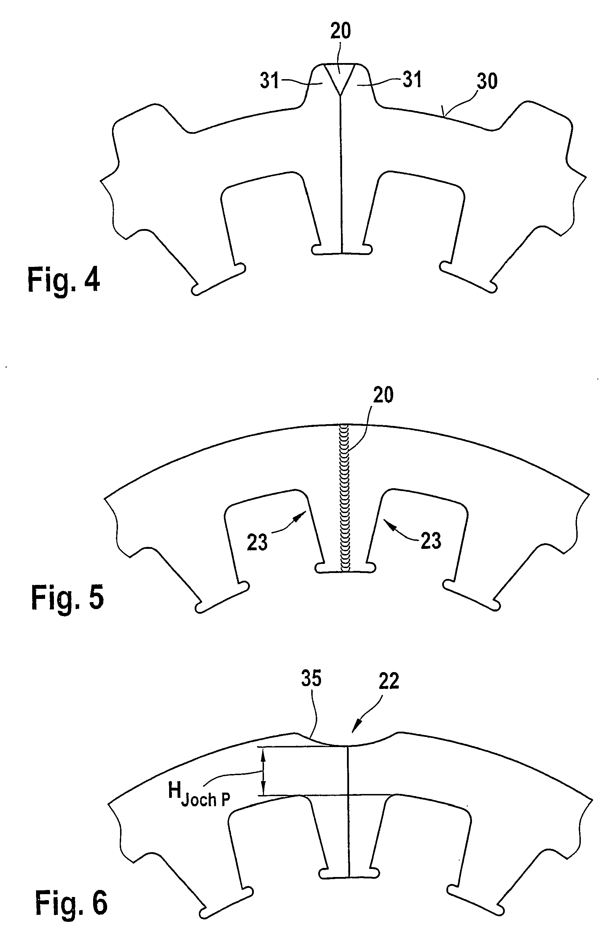

Nach einem weiteren Ausführungsbeispiel ist vorgesehen, dass die Schweißnaht 20 an einem aus zwei Teilzähnen 31 gebildeten Zahn auf der Außenseite 30 des Jochs gebildet ist, siehe Figur 4. In einem weiteren Ausführungsbeispiel ist vorgesehen, dass die Schweißnaht 20 an einer radialen Innenseite zumindest eines Endes 23 des Ständerkernsegments 14 angeordnet ist, siehe auch Figur 2.

Zur Verringerung des magnetischen Geräuschs ist darüber hinaus vorgesehen, dass auf einer axialen Seite des Ständers 10 bzw. des Ständerkerns 13 eine Schweißnaht 20 angeordnet ist. Diese Schweißnaht 20 an der axialen Stirnseite kann zusätzlich angebracht sein, vgl. Figur 5.

Ist vorgesehen, dass an der Fügestelle 22 eine Rinne 35 ausgebildet ist, so ist die wirksame Jochhöhe $H_{Joch}$ nicht gleichbedeutend mit der Jochhöhe, wie sie zuvor beschrieben wurde. Hier ist die projizierte Jochhöhe $H_{JochP}$ als wirksame Jochhöhe $H_{Joch}$ zu ermitteln, die die Grundlage zur Bestimmung der erforderlichen Schweißnahttiefe $T_S$ gemäß der eingangs angegebenen Gleichung dient. Hierzu wird von der tatsächlichen Jochhöhe zwischen zwei Zähnen 25 die radiale Erstreckung der Rinne 35 abgezogen, vgl. Figur 6. In diesem Fall ist der Wert der projizierten Jochhöhe $H_{JochP}$ für den Faktor $H_{Joch}$ einzusetzen.

Damit die Schweißnaht 20 nicht zu spröde ist und demzufolge nur gering belastbar wäre, ist vorgesehen, dass der Ständerkern 13 bzw. die Ständerlamellen 15 aus einem eisenhaltigen Material bestehen, das nicht mehr als 0,1% Kohlenstoffgehalt (Masseanteil) aufweist. Es ist vorgesehen, dass der Ständerkern 13 vor dem Schweißvorgang an der Fügestelle 22 mit der Ständerwicklung 17 bestückt und gemeinsam rundgebogen wird.

Darüber hinaus ist vorgesehen, dass die Schweißnaht 20 in Umfangsrichtung des Jochs 26 eine Reißfestigkeit zwischen 10 kN und 44 kN aufweist. Des Weiteren soll die Schweißnaht bei einer Tiefe zwischen 0,9 mm und 2,2 mm eine Reißfestigkeit zwischen 20 kN und 36 kN aufweisen. Bei Tiefen zwischen 1,1 mm und 1,8 mm soll die Reißfestigkeit zwischen 22 kN und 32 kN betragen.

## Patentansprüche

1. Verfahren zur Herstellung eines Ständers einer elektrischen Maschine, wobei einzelne allgemein streifenförmige Ständerlamellen (15) hergestellt werden, diese einzelnen Ständerlamellen (15) so paketiert werden, dass eine Seite entsteht, die durchgehend mit Nuten (18) versehen ist, wobei später die Ständerwicklung (17) eingelegt wird, wodurch eine Baugruppe aus dem Ständerkern (13) und der Ständerwicklung (17) entsteht, die anschließend so rund gebogen wird, dass ein zylindrischer Hohlraum entsteht, in dem die Nuten (18) enden, wobei zur Fixierung dieses Zustands vorgesehen ist, zumindest zwei nach dem Rundbiegen sich gegenüberliegende Enden (23) des Ständerkerns (13) mittels einer Schweißnaht (20) zu fixieren, **dadurch gekennzeichnet, dass** deren Schweißnahttiefe ($T_S$) von einem Betrag einer Jochhöhe ($H_{Joch}$) und einem Toleranzwert ($\Delta T_S$) abhängig ist und durch eine Funktion

$$T_S = 0,5mm * (H_{Joch}/mm - 1) \pm \Delta T_S ,$$

beschreibbar ist.

2. Verfahren nach Anspruch 1, **dadurch gekennzeichnet, dass** $\Delta T_S$ der Größe $\Delta T_{S1}$ entspricht, die einen Betrag von 1,0 mm hat.

3. Verfahren nach Anspruch 1, **dadurch gekennzeichnet, dass** $\Delta T_S$ der Größe $\Delta T_{S2}$ entspricht, die einen Betrag von 0,5 mm hat.

4. Verfahren nach einem der vorhergehenden Ansprüche, **dadurch gekennzeichnet, dass** die Schweißnahttiefe $T_S$

einen von der Jochhöhe $H_{Joch}$ abhängigen Mindestbetrag $T_{Smin}$ nicht unterschreitet, wobei der Mindestbetrag $T_{Smin}$ durch eine Funktion

$$T_{Smin} = 3/40 * H_{Joch}$$

beschreibbar ist.

5. Verfahren nach einem der vorhergehenden Ansprüche, **dadurch gekennzeichnet, dass** die Schweißnaht (20) an einer radialen Außenseite (30) des Jochs (26) angeordnet wird.

6. Verfahren nach Anspruch 5, **dadurch gekennzeichnet, dass** die Schweißnaht (20) an einem aus zwei Teilzähnen (24) gebildeten Zahn auf der Außenseite (30) des Ständerkerns (13) angeordnet wird.

7. Verfahren nach einem der vorhergehenden Ansprüche, **dadurch gekennzeichnet, dass** die Schweißnaht (20) an zumindest einer axialen Seite des Ständerkerns (13) angeordnet wird.

8. Verfahren nach einem der vorhergehenden Ansprüche, **dadurch gekennzeichnet, dass** die Schweißnaht (20) eine Laserstrahlschweißnaht wird.

9. Elektrische Maschine, insbesondere Generator, mit einem Ständer (10) der nach einem der vorhergehenden Ansprüche hergestellt ist.

**Claims**

1. Method for producing a stator of an electrical machine, in which individual, generally strip-shaped stator laminates (15) are produced, these individual stator laminates (15) are stacked so as to produce a side which is provided continuously with slots (18), the stator winding (17) later being inserted, as a result of which an assembly comprising the stator core (13) and the stator winding (17) is produced which is then bent round such that a cylindrical cavity is produced, in which the slots (18) end, provision being made, in order to fix this state, for at least two ends (23), which are positioned opposite one another after the bending round, of the stator core (13) to be fixed by means of a weld seam (20), **characterized in that** the weld seam depth ($T_S$) thereof is dependent on an absolute value for a yoke height ($H_{yoke}$) and a tolerance value ($\Delta T_S$) and can be described by a function

$$T_S = 0.5 \text{ mm} * (H_{yoke}/mm-1) \pm \Delta T_S.$$

2. Method according to Claim 1, **characterized in that** $\Delta T_S$ corresponds to the variable $\Delta T_{S1}$, which has an absolute value of 1.0 mm.

3. Method according to Claim 1, **characterized in that** $\Delta T_S$ corresponds to the variable $\Delta T_{S2}$, which has an absolute value of 0.5 mm.

4. Method according to one of the preceding claims, **characterized in that** the weld seam depth $T_S$ does not fall below a minimum absolute value $T_{Smin}$, which is dependent on the yoke height $H_{yoke}$, it being possible for the minimum absolute value $T_{Smin}$ to be described by a function

$$T_{Smin} = 3/40 * H_{yoke}.$$

5. Method according to one of the preceding claims, **characterized in that** the weld seam (20) is arranged on a radial outer side (30) of the yoke (26).

**6.** Method according to Claim 5, **characterized in that** the weld seam (20) is arranged on a tooth, which is formed from two tooth elements (24), on the outer side (30) of the stator core (13).

**7.** Method according to one of the preceding claims, **characterized in that** the weld seam (20) is arranged on at least one axial side of the stator core (13).

**8.** Method according to one of the preceding claims, **characterized in that** the weld seam (20) is a laser beam weld seam.

**9.** Electrical machine, in particular generator, having a stator (10), which is produced according to one of the preceding claims.

## Revendications

**1.** Procédé de fabrication d'un stator d'une machine électrique, selon lequel on fabrique des lamelles de stator individuelles (15), généralement en forme de bandes, on empile ces lamelles de stator individuelles (15) pour former une face pourvue en continu d'encoches (18), selon lequel on insère ultérieurement l'enroulement de stator (17), ce qui donne naissance à un module composé du noyau de stator (13) et de l'enroulement de stator (17), qui est ensuite cintré en cercle pourformer un espace creux cylindrique dans lequel les encoches (18) se terminent, selon lequel on prévoit pour fixer cet état de fixer au moins deux extrémités (23) du noyau de stator (13) opposées par suite du cintrage circulaire au moyen d'une soudure (20),
**caractérisé en ce que**
la profondeur de la soudure ($T_S$) dépend d'une valeur de la hauteur de culasse ($H_{culasse}$) et d'une valeur de tolérance ($\Delta T_S$) et qui peut s'exprimer par une fonction

$$T_S = 0,5 \text{ mm} * (H_{culasse})/\text{mm} - 1) \pm \Delta T_S.$$

**2.** Procédé selon la revendication 1,
**caractérisé en ce que**
$\Delta T_S$ correspond à la grandeur $\Delta T_{S1}$, qui a une valeur de 1,0 mm.

**3.** Procédé selon la revendication 1,
**caractérisé en ce que**
$\Delta T_S$ correspond à la grandeur $\Delta T_{S2}$, qui a une valeur de 0,5 mm.

**4.** Procédé selon l'une quelconque des revendications précédentes,
**caractérisé en ce que**
la profondeur de la soudure $T_S$ ne descend pas en dessous d'une valeur minimale $T_{Smin}$ qui dépend de la hauteur de culasse $H_{culasse,}$ selon lequel la valeur minimale $T_{Smin}$ peut s'exprimer par la fonction

$$T_{Smin} = 3/40 * H_{culasse}.$$

**5.** Procédé selon l'une quelconque des revendications précédentes,
**caractérisé en ce que**
la soudure (20) est disposée sur un côté radialement extérieur (30) de la culasse (26).

**6.** Procédé selon la revendication 5,
**caractérisé en ce que**
la soudure (20) est disposée sur une dent formée par deux dents partielles (24) sur le côté extérieur (30) du noyau de stator (13).

7. Procédé selon l'une quelconque des revendications précédentes, **caractérisé en ce que** la soudure (20) est disposée sur au moins un côté axial du noyau de stator (13).

8. Procédé selon l'une quelconque des revendications précédentes, **caractérisé en ce que** la soudure (20) est une soudure au faisceau laser.

9. Machine électrique, en particulier alternateur, avec un stator (10) fabriqué selon l'une quelconque des revendications précédentes.

**Fig. 1**

**Fig. 2**

**Fig. 3**

**20**

**31** **31** **30**

**Fig. 4**

**20**

**23** **23**

**Fig. 5**

**35** **22**

$H_{Joch\,P}$

**Fig. 6**